Europäisches Patentamt

European Patent Office

Office européen des brevets

(11) Numéro de publication: **0 251 903**
**A1**

## (12) DEMANDE DE BREVET EUROPEEN

(21) Numéro de dépôt: **87401460.8**

(22) Date de dépôt: **25.06.87**

(51) Int. Cl.⁴: **A 01 M 23/20**

(30) Priorité: **27.06.86 FR 8609507**

(43) Date de publication de la demande:
**07.01.88 Bulletin 88/01**

(84) Etats contractants désignés: **BE CH DE FR LI**

(71) Demandeur: **Bastien, Michel**
**16, Gare de Boujailles Boujailles**
**F-25560 Frasne (FR)**

(72) Inventeur: **Bastien, Michel**
**16, Gare de Boujailles Boujailles**
**F-25560 Frasne (FR)**

(74) Mandataire: **Sauvage, Renée**
**Cabinet Sauvage 100 bis, avenue de Saint-Mandé**
**F-75012 Paris (FR)**

(54) **Piège pour la capture des rongeurs et autres animaux.**

(57) Le piège comporte :
- une enceinte formée par un conduit (1) dont l'une des extrémités au moins est ouverte et obturable par une porte (3, 4) articulée par un de ses bords sur ledit conduit, ladite porte étant, en position armée du piège, maintenue ouverte par un fil (13), à l'encontre de la force d'au moins un ressort (20) ;
- un circuit électrique (29-32) incorporant au moins une portion dudit fil (13), une source de courant (28), et un interrupteur (26, 27) maintenu ouvert en position armée du piège et susceptible de se fermer sous l'effet de moyens (22, 25) activés par l'animal à piéger, ledit fil étant adapté à se rompre sous l'effet du passage du courant.

Lesdits moyens activés par l'animal sont constitués par un support d'appât coulissant dont la tête (22) reçoit l'appât (24) et dont le pied (25) appuie élastiquement sur une lame (26) formant l'un des contacts de l'interrupteur en l'écartant de l'autre contact (27), toute diminution du poids appliqué sur ladite tête (22) entraînant, lorsque ce poids devient inférieur à un seuil prédéterminé, le retour élastique de la lame (26) et la fermeture du circuit électrique (29-32).

FIG5

EP 0 251 903 A1

## Description

Piège pour la capture des rongeurs et autres animaux.

La présente invention ocncerne un piège pour la capture des rongeurs et autres animaux, du type comportant :

- une enceinte formée par un conduit dont l'une des extrémités au moins est ouverte et obturable par une porte articulée par un de ses bords sur ledit conduit, ladite porte étant, en position armée du piège, maintenue ouverte par un fil, à l'encontre de la force d'au moins un ressort ;
- un circuit électrique incorporant au moins une portion dudit fil ;
- une source de courant ; et
- un interrupteur maintenu ouvert en position armée du piège et susceptible de se fermer sous l'effet de moyens activés par l'animal à piéger, ledit fil étant adapté à se rompre sous l'effet du passage du courant.

Un dispositif de ce type est connu d'après le brevet britannique n° 765 077.

Dans le dispositif connu, les moyens activés par l'animal sont constitués par un faux plancher mobile qui est maintenu surélevé par un ressort, ledit plancher s'abaissant, à l'encontre de la résistance du ressort, lorsqu'un animal pénètre dans le piège.

Les contacts de l'interrupteur sont prévus, l'un sous le faux plancher, l'autre sur le plancher vrai, de sorte que l'interrupteur se ferme lorsque le faux plancher s'abaisse.

On comprend que c'est donc le poids de l'animal qui déclenche le piège.

Ce type de piège à l'inconvénient de ne capturer que les animaux dont le poids excède la résistance du ressort agissant sur le plancher mobile.

La présente invention a pour but de remédier à cet inconvénient en apportant un piège dont le déclenchement n'est pas lié au poids de l'animal et qui peut donc capturer aussi bien des musaraignes (poids moyen 2 g) que des gros rongeurs, tels que le capybara (dont le poids peut atteindre 50 kg), si le piège est suffisamment grand, avec le même appât, et dans les mêmes conditions de fonctionnement.

Ce but est atteint en ce sens que, dans le piège selon l'invention, les moyens activés par l'animal sont constitués par un support d'appât coulissant dont la tête reçoit l'appât et dont le pied appuie élastiquement sur une lame formant l'un des contacts de l'interrupteur en l'écartant de l'autre contact, toute diminution du poids appliquée sur ladite tête entraînant, lorsque ce poids devient inférieur à un seuil prédéterminé, le retour élastique de la lame et la fermeture du circuit électrique.

On comprend ainsi que le déclenchement du piège n'est pas lié au poids de l'animal mais à la diminution du poids de l'appât qui pourra se faire progressivement s'il s'agit d'un petit animal, ou même de petits insectes, tels que des cafards, ou qui pourra se faire brusquement si l'animal enlève l'appât de son support. Que la diminution de poids soit progressive ou instantanée, dès que la force à laquelle est somise la tête du support d'appât est devenue inférieure au seuil prédéterminé, le piège se déclenche instantanément, emprisonnant le ou les animaux dans son enceinte.

Dans une forme d'exécution pratique de l'invention, le circuit électrique comporte deux plots extérieurs à l'enceinte au contact desquels est amené le fil adapté à se rompre sous l'effet du passage du courant.

Ces plots sont avantageusement recouverts d'une protection vis-à-vis des intempéries, car le piège peut être utilisé à l'extérieur et le fil est glissé entre la protection et les plots.

Le piège peut être à parois ajourées, mais dans une forme d'exécution préférée, le conduit formant l'enceinte est à parois pleines et ses extrémités ouvertes sont hermétiquement oburables par la ou lesdites portes.

Cette forme d'exécution permet, si on le désire, d'asphyxier in situ l'animal capturé.

A cet effet, le piège est muni de moyens d'admission dans l'enceinte d'un gaz toxique déclenchés par le choc résultant de la fermeture de la porte.

Cette disposition permet de détruire l'animal piégé sans intervention de l'homme puisque la fermeture des portes entraîne immédiatement l'admission du gaz toxique.

Ce gaz toxique est de préférence du gaz carbonique ($CO_2$) car, comme on le sait, il entraîne une mort douce et presque instantanée.

Dans une forme d'exécution préférée, le piège comporte extérieurement un embout fileté pour le raccordement d'une cartouche de gaz à opercule, lequel embout présente intérieurement une goupille de percussion venant dans l'axe de l'opercule de la cartouche, ladite goupille étant une goupille fendue montée coulissante dans le fond de l'embout et étant susceptible d'être repoussée vers l'opercule sous l'effet de la fermeture de la porte.

Si l'on désire capturer l'animal vivant, par exemple pour s'assurer que l'on n'a pas piégé accidentellement un animal familier (par exemple un chat), ou un membre d'une espèce utile (par exemple un hérisson) on s'abstiendra de monter la cartouche de gaz dans son embout ou on ne vissera que partiellement le support de cartouche sur l'embout. Dans ce dernier cas, lorsque la porte se refermera, l'opercule de la cartouche se trouvera trop éloigné de la goupille de percussion pour être perforé. L'animal sera donc simplement piégé sans avoir été blessé par quoi que ce soit. L'enceinte comportant de préférence un orifice d'entrée d'air, obturable à volonté, on aura dans ce cas laissé l'orifice d'entrée d'air ouvert. S'il s'avère que l'animal capturé est un nuisible que l'on désire détruire, on rebouchera l'orifice d'entrée d'air, et il suffira de terminer le vissage du support de cartouche sur l'embout pour que l'enceinte se remplisse de gaz toxique.

Il est important de régler le débit d'admission du gaz toxique dans l'enceinte et, à cet effet, un élément obturateur est inséré dans la goupille fendue ou roulée pour ne laisser qu'un passage restreint au gaz libéré par la cartouche.

Cet élément peut être un fil de métal mou, tel que l'étain, auquel cas le gaz s'écoulera par la fente de la goupille et par l'espace laissé par le fil d'étain lorsqu'il est comprimé. Au lieu d'un fil d'étain, on peut utiliser une petite tige pointue que se projettera au delà de la goupille et que servira d'organe de percussion proprement dit lorsque l'on utilisera des cartouches de plus grandes dimensions ou à opercule plus résistant.

Dans une forme d'exécution préférée, l'embout récepteur de la cartouche est monté directement sur la porte, la goupille fendue coulisse au travers de la porte et une butée est prévue dans l'enceinte pour repousser la goupille vers la cartouche lorsque la porte se ferme.

Dans les pièges antérieurement connus, utilisant un circuit électrique incorporant un fil adapté à se rompre sous l'effet du passage du courant, le fil est généralement un fil de matière thermofusible ou combustible.

Selon l'invention, on utilise un fil métallique et, de préférence, un fil formé d'un alliage à base de nickel/chrome, par exemple un alliage de marque NICHROME 80S ou 70.

Un tel fil a l'avantage de se rompre instantanément sous l'effet du passage du courant et d'être suffisamment résistant pour maintenir ouverte(s) la ou les portes du piège à l'encontre de la force de rappel très puissante des ressorts équipant ces portes. Par suite de la traction exercée par ces ressorts en position armée du piège, le fil métallique est pratiquement à sa limite élastique de sorte qu'on pense qu'il se rompt par suite d'un affaiblissement de résistance entraînée par le passage du courant, plutôt que par fusion.

Pour permettre à l'utilisateur d'identifier l'animal piégé et/ou de vérifier qu'il est bien mort avant l'ouverture du piège, une au moins des parois de l'enceinte est au moins partiellement transparente ou translucide.

Par ailleurs, pour faciliter la préparation du piège et l'extraction de l'animal asphyxié, le piège comporte un plancher extractible par une extrémité ouverte dudit conduit, ledit plancher présentant un orifice pour le passage du support d'appât coulissant et, à proximité immédiat dudit orifice, une pique de positionnement de l'appât.

On comprend que, de cette manière, il est possible d'extraire le plancher, d'enfiler sur la pique de positionnement l'appât voulu de telle manière que lorsque l'on replacera le plancher dans le piège avec son orifice en coïncidence avec le support d'appât, l'appât reposera automatiquement sur ledit support. Lorsqu'un animal aura été capturé et asphyxié, on pourra facilement l'enlever du piège en extrayant le plancher.

L'invention sera mieux comprise à la lecture de la description ci-après faite en référence aux dessins annexés dans lesquels :

- la figure 1 est une vue schématique de la face avant du piège en position de repos,
- la figure 2 est une vue en perspective du piège de la figure 1 avec toutefois, comme différence, qu'à la figure 1 aucune cartouche de gaz n'est montée sur le piège alors qu'il y en a une de mise en place à la figure 2,
- la figure 3 est une vue en perspective similaire à celle de la figure 2 mais avec le piège en cours de mise en service,
- la figure 4 est une vue du piège armé vue dans la direction opposée à celle de la figure 3,
- la figure 5 est une vue en coupe longitudinale du piège de la figure 4,
- la figure 6 est une vue de détail de la zone des plots de la figure 5,
- la figure 7 est une vue de dessus correspondant à la figure 6,
- la figure 8 est une vue de détail montrant le mode de coopération entre la goupille de percussion et la cartouche de gaz,
- la figure 9 est une coupe prise selon la ligne IX-IX de la figure 8, et
- la figure 10 est une variante de la figure 9.

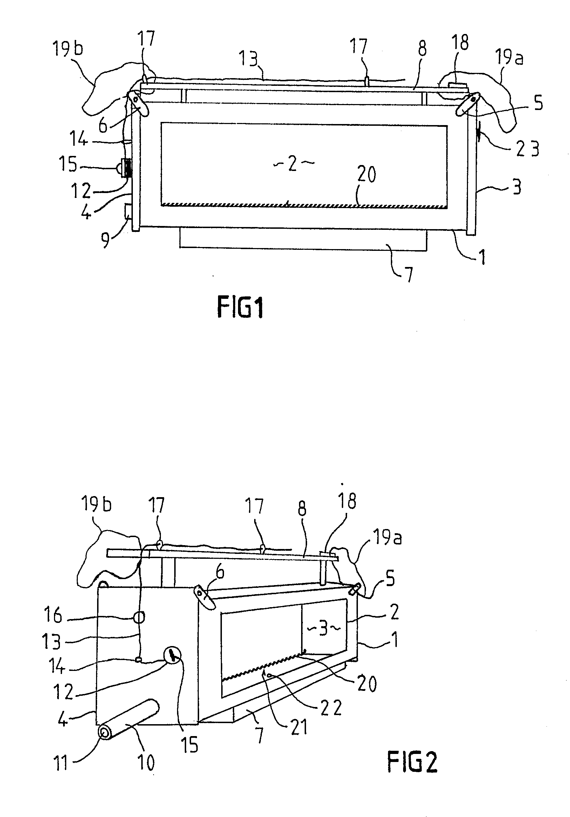

Si l'on se réfère aux figures 1 et 2, on voit que le piège est constitué par un conduit 1, par exemple en matière plastique, présentant une fenêtre 2 en matériau transparent ou translucide. Les extrémités ouvertes du conduit 1 sont chacunes fermées par une porte respectivement 3 et 4. Les portes 3 et 4 sont montées pivotantes à leur partie supérieure sur le conduit 1 au moyen d'articulations respectivement 5 et 6.

L'enceinte formée par le conduit 1 et les portes 3 et 4 est supportée par un socle 7 dont le contenu sera décrit par référence à la figure 5.

Comme il ressort de la figure 1, la porte 3 est munie d'une languette d'amarrage 23 et la porte 4 est pourvue d'un embout 9 pour le montage d'un support 10 de cartouche de gaz toxique 11 (figure 2). Sont également prévus sur la porte 4 une bobine 12 d'alimentation en fil 13 et un guide-fil 14. La bobine 12 est munie d'un écrou papillon 15 pour l'immobiliser en rotation. Une ouverture obturée par un bouchon 16 est en outre prévue dans la porte 4.

La poignée 8 comporte deux guides-fil 17 et des plots recouverts d'une protection 18 contre les intempéries. La protection 18 est au moins trnaslucide pour vérifier la mise en place du fil 13, comme cela est décrit plus loin.

La poignée 14 sert en outre à l'ancrage de deux boucles 19a, 19b en cordonnet dont l'utilité sera décrite plus loin.

Comme il ressort encore des figures 1 et 2, les portes 3 et 4 sont réunies entre elles par une paire de ressorts 20 dont un seul, schématisé, est visible aux figures 1 et 2. On voit encore, d'après les figures 1 à 3, qu'il est prévu une pique 21 de positionnement d'appât au voisinage immédiat de la tête 22 d'un support d'appât qui sera décrit en détail par référence à la figure 5.

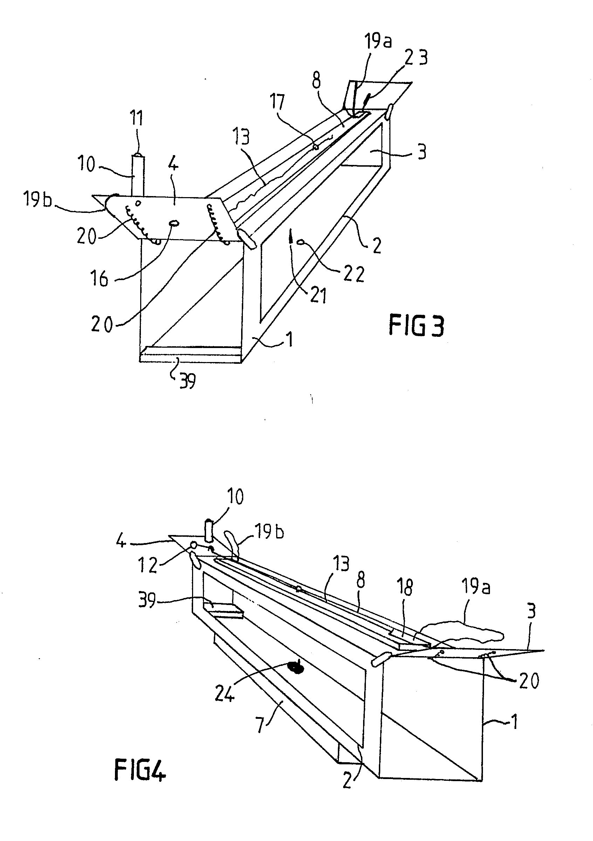

Pour préparer le piège, l'utilisateur relève la porte 3 et la maintient relevée, à l'encontre de la force des ressorts 20, en glissant le cordonnet 19a autour d'un coin de ladite porte. Il fait de même ensuite avec la porte 4 et la boucle 19b. Les portes sont ainsi maintenues relevées avec les ressorts 20 étirés comme on le voit à la figure 3.

A ce stade, l'utilisateur place un appât 24 sur la tête du porte-appât après quoi il desserre l'écrou papillon 15 de la bobine 12 et tire le fil 13 jusqu'à le faire passer sous la protection 18 pour enfin lui faire faire quelques tours autour de la languette d'amarrage 23. Il resserre ensuite l'écrou papillon 15.

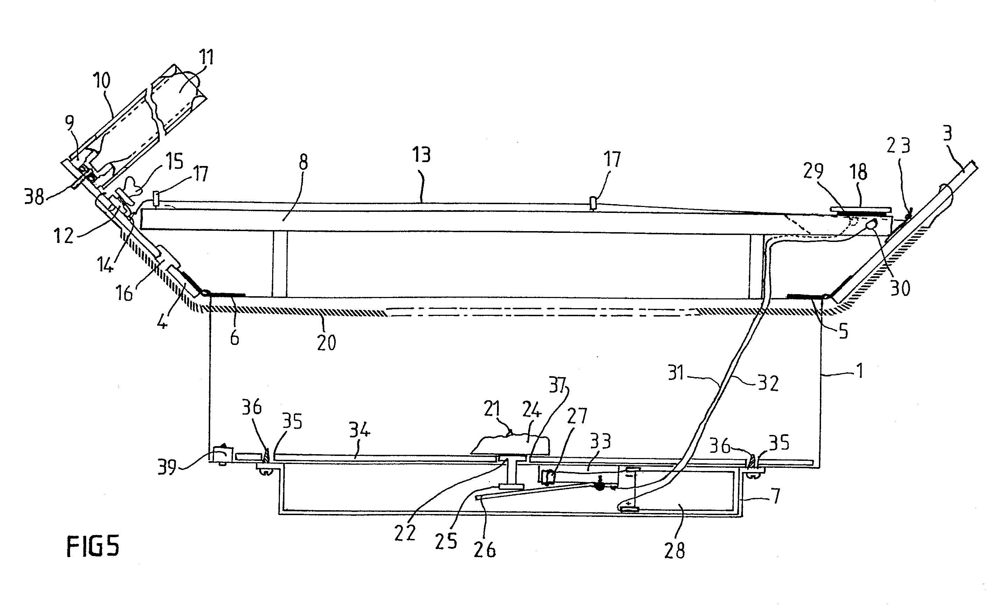

Les portes 3 et 4 se trouvent dès lors mutuellement maintenues relevées par le fil 13 immobilisé d'un côté sur la bobine 12 et de l'autre côté par la languette d'amarrage 23. Il est alors possible d'enlever les boucles 19a et 19b des portes 3 et 4 (figure 4) et le piège se trouve ainsi armé et en état de fonctionner.

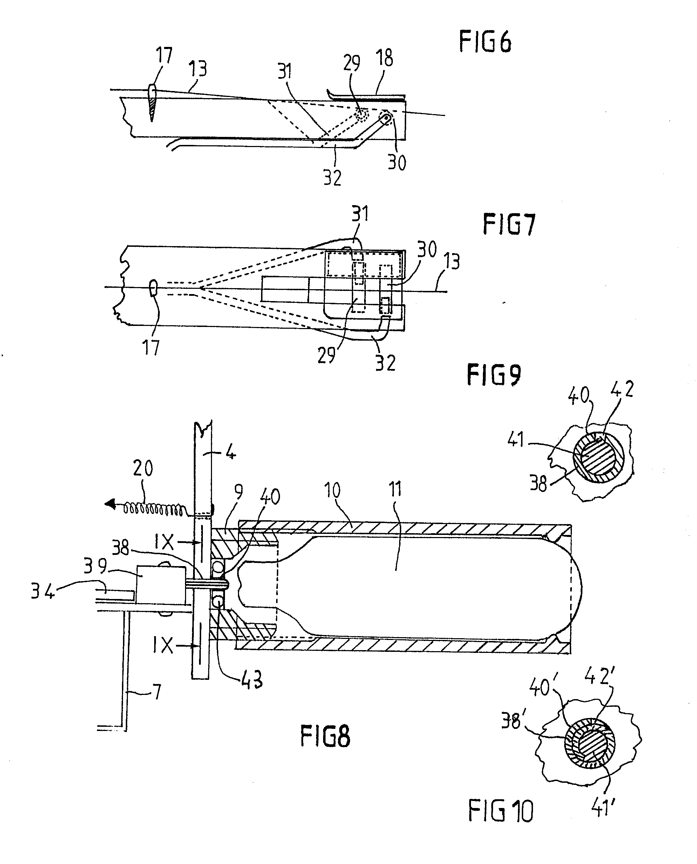

Si l'on en vient à la figure 5, on voit que l'appât 24 repose sur la tête 22 du porte-appât dont le pied 25 appuie élastiquement sur une lame métallique 26 formant l'un des contacts d'un interrupteur dont l'autre contact est indiqué en 27. Les contacts 26 et 27 appartiennent à un circuit électrique comprenant une pile 28 et deux plots 29 et 30 situés sous la protection 18. Plus précisément, la lame 26 est réunie par un fil 31 au plot 29, le plot 30 est réuni à l'une des bornes de la pile 28 par un fil 32 tandis que l'autre borne de la pile 28 est réunie au contact fixe 27 de l'interrupteur par un fil 33. La relation entre les plots 29 et 30 et le fil 13, en position armée du piège, est plus facilement visible aux figures 6 et 7. On voit que le plot 29 est situé un peu plus haut que le plot 30 pour garantir un bon contact entre les plots et le fil.

Si le fil 13 est en alliage Ni/Cr/Si, les plots sont avantageusement en nickel pour éviter la création d'électricité entre eux-mêmes et le fil. La distance entre les bornes est d'environ 5 mm. Au-delà de cette valeur, il faut une trop grande intensité pour que le temps de réponse soit court et, en deçà, en milieu fortement humide, il y a un risque d'électrolyse lorsque les plots sont sous tension.

Comme il ressort de la figure 5, le piège comporte un plancher amovible 34 qui est convenablement positionné dans l'enceinte au moyen de deux orifices d'extrémité 35 venant coopérer avec la pointe légèrement saillante des vis 36 servant par ailleurs à la fixation du socle 7. Le plancher 34 présente, par ailleurs, une découpe 37 permettant le passage de la tête 22 du support d'appât. Comme le plancher 34 est extractible, il suffit d'enfiler l'appât sur la pique 21 que est située au voisinage immédiat de la découpe 37 pour s'assurer qu'une fois le plancher remis en place l'appât reposera sur la tête 22 en ouvrant l'interrupteur 26, 27. Lorsque le piège est en position armée (figures 4 et 5) et qu'un animal mange une partie de l'appât ou l'enlève de la tête 22 et que la force à laquelle est soumise cette tête devient inférieure à un seuil prédéterminé, la lame élastique dont la force de retour n'est plus surmontée par le poids de l'appât remonte en repoussant le support d'appât et en venant toucher le contact 27. Le circuit électrique est alors fermé et il s'ensuit la rupture du fil qui touchait les deux plots 29 et 30. Le fil 13 étant rompu, plus rien ne retient les portes en position relevée et les ressorts 20 les referment brusquement.

Si une cartouche de gaz 11 est montée comme le montre la figure 5, c'est-à-dire avec son support complètement vissé sur l'embout 9, la goupille 38 de l'embout en venant heurter la butée 39 prévue à cet effet dans le conduit 1 sera repoussée par ladite butée et viendra percer l'opercule de la cartouche 11. La relation entre la cartouche et la goupille de percussion peut être mieux comprise à l'examen de la figure 8. Comme on le voit, sur la porte 4 est monté l'embout 9 qui présente un filetage extérieur adapté à venir en prise avec le filetage intérieur du support 10. Le support 10 est vissé sur l'embout 9 après que la cartouche à opercule 11 ait été mise en place dans ledit support. Comme on le voit, il est prévu dans la porte 4 un passage 40 pour permettre à la goupille 38 de coulisser vers la cartouche 11 lorsqu'elle vient heurter la butée 39.

Dans la représentation de la figure 8, le support 10 de cartouche n'est pas totalement vissé sur l'embout 9 de sorte que lorsque la porte se ferme et que la goupille est projetée en direction de la cartouche, cette projection est insuffisante pour percer l'opercule de la cartouche.

Lorsque le support 10 est totalement vissé, la cartouche 11 vient en contact avec un joint torique 43 prévu dans l'embout 9 et qui assure l'étanchéité.

La structure de la goupille 38 ressort mieux de la coupe agrandie de la figure 9. On voit que la goupille 38 proprement dite est une goupille fendue et qu'elle est intérieurement garnie d'un matériau 41 qui en l'occurrence est un fil d'étain. On voit qu'un espace 42 est ménagé par la goupille avec réduction du passage par un bourrelet formé par la compression du matériau 41 et c'est par ce passage que le gaz provenant de la cartouche s'écoule vers l'enceinte du piège si l'opercule est perforé. Cette structure permet d'avoir un temps d'écoulement de plus de 30 secondes et de moins d'une minute pour une cartouche ayant une pression de gaz d'environ 100 bars.

Dans la variante de la figure 10, la goupille 38' est une goupille roulée, par exemple telle que commercialisée sous la marque MECASPIR par la société MECANINDUS. Comme dans le cas précédent, elle est garnie d'un matériau 41' et, cette fois, l'espace 42' permet l'échappement contrôlée du gaz.

Comme il ressort de la description qui précède, le piège selon l'invention permet de capturer au choix, mort ou vif, des animaux de tailles indifférentes, pourvu bien entendu que la taille du piège soit suffisante. La capture proprement dite des animaux n'entraîne aucune blessure ou souffrance de quelque nature que ce soit, à la différence des pièges existants qui, pour la plupart, utilisent des moyens cruels pour l'animal et souvent dangereux pour l'utilisateur et les animaux domestiques.

Si on désire détruire l'animal, l'asphyxie au gaz carbonique entraîne une mort douce et l'animal n'est aucunement endommagé sur le plan de l'aspect, ce qui est intéressant si la capture a été faite à des fins de taxidermie.

Il est bien entendu que, si tout au long de la description, on a parlé de fil métallique, on n'entend pas se limiter à un produit de section transversale circulaire ; il pourrait tout aussi bien s'agir d'un ruban plat.

## Revendications

1 - Piège pour la capture des rongeurs et autres animaux, du type comportant :
- une enceinte formée par un conduit (1) dont l'une des extrémités au moins est ouverte et obturable par une porte (3, 4) articulée par un de ses bords sur ledit conduit, ladite porte étant, en position armée du piège, maintenue ouverte par un fil (13), à l'encontre de la force d'au moins un ressort (20) ;
- un circuit électrique (29-32) incorporant au moins une portion dudit fil (13) ;
- une source de courant (28) ;
- un interrupteur (26, 27) maintenu ouvert en position armée du piège et susceptible de se fermer sous l'effet de moyens (22, 25) activés par l'animal à piéger, ledit fil étant adapté à se rompre sous l'effet du passage du courant, caractérisé en ce que lesdits moyens activés par l'animal sont constitués par un support d'appât coulissant dont la tête (22) reçoit l'appât (24) et dont le pied (25) appuie élastiquement sur une lame (26) formant l'un des contacts de l'interrupteur en l'écartant de l'autre contact (27), toute diminution du poids appliqué sur ladite tête (22) entraînant, lorsque ce poids devient inférieur à un seuil prédéterminé, le retour élastique de la lame (26) et la fermeture du circuit électrique (29-32).

2 - Piège selon la revendication 1, caractérisé en ce que le circuit électrique comporte deux plots (29, 30) extérieurs à l'enceinte au contact desquels est amené le fil (13) adapté à se rompre sous l'effet du passage du courant.

3 - Piège selon la revendication 1 ou 2, caractérisé en ce que le conduit (1) formant l'enceinte est à paroi pleine et en ce que son ou ses extrémités ouvertes sont hermétiquement obturable(s) par la ou lesdites portes (3, 4).

4 - Piège selon la revendication 3, caractérisé en ce qu'il est muni de moyens d'admission (11, 38) dans l'enceinte d'un gaz toxique déclenchés par le choc résultant de la fermeture de la porte (4).

5 - Piège selon la revendicaton 4, caractérisé en ce qu'il comporte extérieurement un embout (9) fileté pour le raccordement d'une cartouche de gaz à opercule (11), lequel embout (9) présente intérieurement une goupille de percussion (38) venant dans l'axe de l'opercule de la cartouche (11), ladite goupille étant une goupille fendue ou roulée montée coulissante dans le fond de l'embout (9) et étant susceptible d'être repoussée vers l'opercule sous l'effet de la fermeture de la porte (4).

6 - Piège selon la revendication 5, caractérisé en ce qu'un élément obturateur (41) est inséré dans la goupille fendue (38) pour ne laisser qu'un passage (42) restreint au gaz libéré par la cartouche (11).

7 - Piège selon la revendication 5, caractérisé en ce que ledit embout (9) est monté directement sur la porte, en ce que la goupille fendue coulisse au travers de la porte et en ce qu'une butée (39) prévue dans l'enceinte repousse la goupille (38) vers la cartouche (11) lorsque la porte (4) se ferme.

8 - Piège selon l'une quelconque des revendications 1 à 7, caractérisé en ce que le fil (13) est un fil métallique.

9 - Piège selon la revendication 8, caractérisé en ce que le fil (13) est formé d'un alliage à base de nickel/chrome.

10 - Piège selon l'une quelconque des revendications 1 à 9, caractérisé en ce qu'il comporte un plancher extractible (34) par une extrémité ouverte du conduit (1), ledit plancher présentant une découpe (37) pour le passage du support d'appât coulissant (22, 25) et, à proximité immédiate dudit orifice, une pique de positionnement (21) de l'appât (24).

0251903

FIG1

FIG2

FIG 3

FIG4

FIG5

0251903

0251903

FIG 6

FIG 7

FIG 9

FIG 8

FIG 10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | GB-A- 765 077 (C. BARKER)<br><br>* Page 1, lignes 26-45; figures 1-4 * | 1-3,8,9 | A 01 M 23/20 |
| A | US-A-3 356 087 (Y.R. GUTTMAN)<br>* Colonne 5, lignes 57-70; figures 5-7 * | 4,5 | |
| A | CH-A- 246 595 (J.F. WEGMANN) | | |
| A | ELEKTRO, vol. 10, no. 7/8, juillet/août 1984, page 774, Canterbury, Kent, GB; "Electronic mousetrap" | | |

DOMAINES TECHNIQUES RECHERCHES (Int. Cl.4)

A 01 M
A 61 D

Le présent rapport de recherche a été établi pour toutes les revendications

| Lieu de la recherche | Date d'achèvement de la recherche | Examinateur |
|---|---|---|
| LA HAYE | 03-09-1987 | NEHRDICH H.J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82